# EUROPEAN PATENT APPLICATION

(11) **EP 1 524 804 A1**
(43) Date of publication of application: **20.04.2005**
(21) Application number: 03292600.8
(22) Date of filing: 17.10.2003
(51) Int. Cl.: H04L 12/56

(54) **A method of providing packetized data from a radio network controller to a base station**

(71) Applicant: ALCATEL, 75008 Paris (FR)
(72) Inventor: Kaminski, Stephen, Dipl.-Ing., 73054 Eislingen (DE); Klein, Siegfried, Dipl.-Inform. (FH), 70437 Stuttgart (DE)
(74) Representative: Richardt, Markus Albert, Dipl.-Ing.

(57) **Abstract**

The present invention relates to a method of providing packetized data from a radio network controller of a wireless cellular telecommunication system to a base station of the wireless cellular telecommunication system, the method comprising:
- transferring of a data packet from the radio network controller to the base station,
- in case the data packet cannot be transmitted from the base station to a user equipment: requesting a renewed transfer of the data packet by the base station from the radio network controller.

## Description

### Field of the invention

The present invention relates to the field of wireless telecommunication systems, and more particularly without limitation to the operation of radio network controllers and base stations in such a system.

### Background and prior art

The basic architecture for the universal terrestrial radio access network (UTRAN) consists of a number of radio network controllers (RNCs) that are connected to a core network. The RNCs are connected among themselves via the Iᵤᵣ interface. Each RNC supports multiple base stations which are also referred to as Node Bs. The I_{ub} interface is used for the communication between a radio network controller and a base stations to which it is coupled. The UTRAN provides wideband code division multiple access (W-CDMA) support.

High speed downlink packet access (HSDPA) is considered one of the key features of such third generation wireless communication systems. It provides high data rate transmission in the downlink to support multi media services (cf. "The high speed packet data evolution of WCDMA", Personal, Indoor and Mobile Radio Communications, 2001 12th IEEE International Symposium on Parkvall, S.; Dahlman, E.; Frenger, P.; Beming, P.; Persson, M. Pages: G-27 - G-31 vol.2 / "Design and performance of down link shared control channel for HSDPA", Personal, Indoor and Mobile Radio Communications, 2002. The 13th IEEE International Symposium on Das, A.; Khan, F.; Sampath, A.; Hsuan-Jung Su Pages: 1088 - 1091 vol.3 / "Capacity enhancement for HSDPA in W-CDMA system" , Vehicular Technology Conference, 2002. Proceedings. VTC 2002-Fall. 2002 IEEE 56th Horng, J.H.; Vannucci, G.; Jinyu Zhang Pages: 661 - 665 vol.2 / "Design of packet transmission scheduler for high speed downlink packet access systems", Vehicular Technology Conference, 2002. VTC Spring 2002. IEEE 55th Wha Sook Jeon; Dong Geun Jeong; Bonghoe Kim Page(s): 1125 - 1129 vol.3)

Applying a number of parallel shared channels and higher levels of modulation and coding enables the Node B to transfer data to the UE with a high data rate. In order to perform an automatic repeat request (ARQ) process and decide about the modulation and coding scheme (MCS) in a HSDPA capable system, each UE is expected to estimate the channel quality and report the estimated carrier quality indication to its Node B. On this basis Node B performs a channel assignment for various existing users (cf. "A radio aware random iterative scheduling technique for high speed downlink packet access", Vehicular Technology Conference, 2002. Proceedings. VTC 2002-Fall. 2002 IEEE 56th Abedi, S.; Vadgama, S. Pages: 2322 - 2326 vol.4)

### Summary of the invention

The present invention provides for a method of providing packetized data from a radio network controller of a wireless cellular telecommunication system to a base station. First a data packet is provided from the radio network controller to the base station for transmittal to user equipment. In case the data packets cannot be transmitted from the base station to the user equipment, the base station requests a renewed transfer of the data packet. This is particularly advantageous for controlling the transfer of HSDPA data packets from the radio network controller to the base station.

In accordance with one aspect of the invention the renewed transfer of the data packet is requested by the base station in case the data packet cannot be transmitted from the base station to the user equipment due to actual radio conditions.

For example the original data packet received by the base station from the radio network controller for transmittal to the user equipment may have a relatively large packet or segment size. When radio conditions deteriorate it becomes impossible for the base station to transmit a data packet having a large segment size with a reasonable expectation of success. In order to avoid "clogging" of the base station's buffer with data packets that cannot be transmitted, the base station requests a renewed transfer of the data packets with a reduced segment size.

In accordance with a further aspect of the present invention, the renewed transfer of the data packet is requested by the base station in case a base station handover occurs. In this case the original base station can not transmit the data packet to the user equipment as the user equipment has moved outside the coverage of the original base station. In this instance the radio network controller transfers the data packet to the target base station to which the user equipment has moved in response to the original base station's request for a renewed transfer of the data packet. This enables seamless HSDPA handover.

In accordance with a further aspect of the present invention a radio network controller handover occurs, i.e. the user equipment moves outside the coverage of the original base station which is coupled to the original radio network controller to a target base station which is coupled to another radio network controller, i.e. the target network controller. In this instance the original radio network controller transfers the data packet to the target radio network controller that is coupled to the target base station in response to the request received from the original base station for the renewed transfer of the data packet. This enables the target radio network controller to transfer the data packet to the target base station from where the data packet is transmitted to the user equipment. This enables HSDPA handover even if the user equipment moves between radio network controllers.

In accordance with a further preferred embodiment of the invention the data packets are buffered both in the radio network controller and in the base station. The radio network controller buffer and the base station buffer are synchronised by means of synchronisation points. In order to remove data packets from the buffers that have already been transmitted to the user equipment the locations of the synchronisation points are updated from time to time. The updating of the locations of the synchronisation points and a request for a renewed transfer of data packets can be performed at substantially the same point of time by moving the synchronisation point to a data packet position from whereon the renewed transfer is requested.

### Brief description of the drawings

In the following embodiments of the invention will be described in greater detail by making reference to the drawings in which:
- Figure 1: is a flow chart being illustrative of a preferred embodiment of a method of the invention
- Figure 2: shows a block diagram of an embodiment of a radio network controller being coupled to a Node B
- Figure 3: shows the block diagram of figure 2 when radio conditions deteriorate,
- Figure 4: is illustrative of a method for controlling the radio network controller buffer,
- Figure 5: is a block diagram being illustrative of the communication between radio network controller, Node B and user equipment,
- Figure 6: is an object relationship diagram of the system of figure 5,
- Figure 7: is a block diagram being illustrative of a Node B handover,
- Figure 8: is an object relationship diagram of the system of figure 7,
- Figure 9: is a block diagram being illustrative of a radio network controller handover,
- Figure 10: is an object relationship diagram being illustrative of the system of figure 9.

### Detailed description

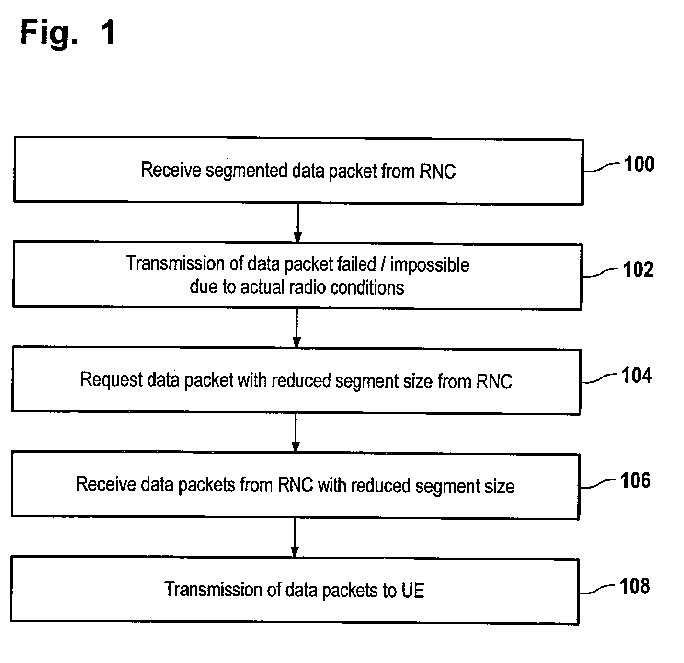

Figure 1 shows a flow chart for performing an embodiment of a method of the invention. In step 100 a base station of a wireless cellular telecommunication system receives a data packet from the radio network controller to which it is coupled. Typically the radio network controller has received user data, such as multimedia data, that are to be transmitted to a user equipment. The radio network controller performs segmentation of the user data to provide data packets which are then transferred to the base station.

In step 102 the base station determines that transmission of the data packet that it received from the radio network controller failed or is impossible. This can be due to various reasons (i) radio conditions experienced between the base station and the user equipment have deteriorated such that the data packet with the packet size received from the radio network controller cannot be transmitted with a reasonable expectation of success, or (ii) the user equipment has moved outside the coverage of the base station; this situation is also referred to as "handover".

In step 104 the base station requests a renewed transfer of the data packet from the radio network controller. In case (i) a reduction of the data packet size is also requested. Only case (i) is considered in the following explanation of the flow chart of figure 1.

In step 106 the base station receives data packets from the radio network controller with reduced data packet size. These data packets are then transmitted from the base station to the user equipment in step 108.

It is to be noted that the base station's request for a renewed transfer of the data packet with reduced data packet size prevents a blocking of the transmission of data packets which would otherwise be experienced in step 102. This is particularly useful for high bandwidth applications like HSDPA and for the purposes of transmitting multimedia and streaming data.

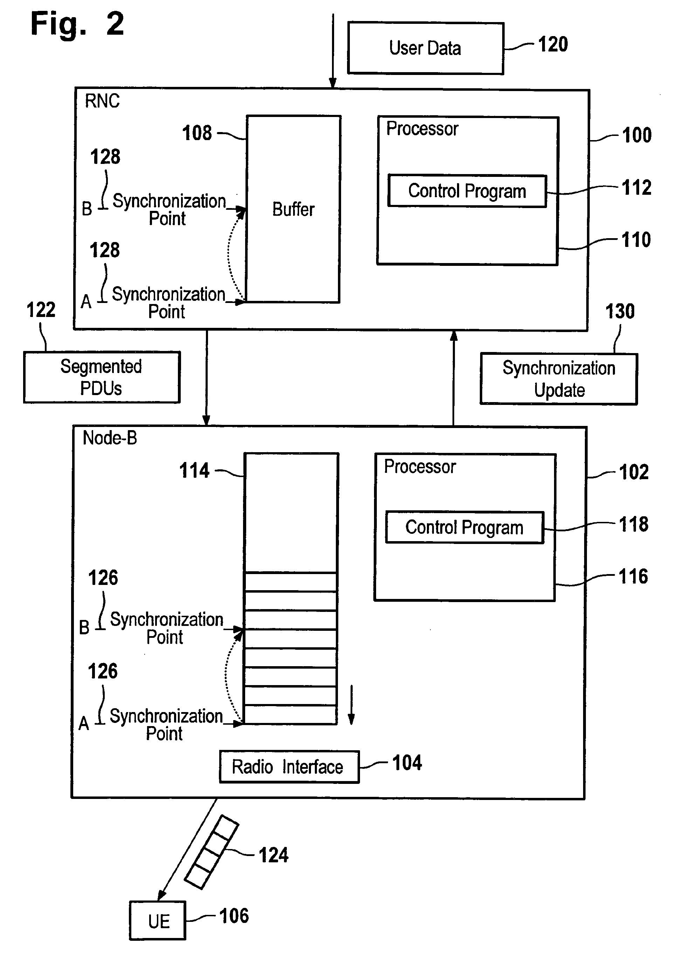

Figure 2 shows a block diagram of a corresponding wireless cellular telecommunication system. Radio network controller (RNC) 100 is coupled to Node B 102. Node B is also referred to as base station.

Node B 102 has radio interface 104 for transmitting of data to user equipment (UE) 106.

RNC 100 has buffer 108 for buffering of data packets to be transferred to Node B 102 and processor 110 for running control program 112.

Node B has buffer 114 for buffering of data packets received from RNC 100. Further Node B 102 has processor 116 for running control program 118.

In operation RNC 100 receives user data 120 from the core network. For example user data 120 is multimedia data, such as a video sequence.

User data 120 is segmented by control program 112 to provide data packets. These data packets are also referred to as protocol data units (PDUs). The PDUs are stored in buffer 108. From there PDUs 122 are transferred to Node B 102 where they are buffered in buffer 114. From buffer 114 the PDUs are sequentially transmitted via radio interface 104 to user equipment 106.

In the case of HSDPA MAC-d PDUs 122 are transferred from RNC 100 to Node B 102. Several MAC-d PDUs are concatenated to form a MAC-hs PDU which is transmitted in one radio frame 124 to user equipment 106.

After radio frame 124 has been successfully transmitted to user equipment 106, synchronization point 126 of Node B 102 can be moved from position A to position B as shown in figure 2. MAC-d PDUs 122 stored between A and B in buffer 114 are erased as they have already been successfully transmitted to UE 106. It is to be noted that this operation can be performed more or less frequently depending on the buffer size. In other words, it is usually not necessary to update the position of the synchronization point after each successful transmission of a radio frame 124 but at longer intervals.

Node B 102 sends control message 130 to RNC 100 in order to perform the corresponding update operation with respect to buffer 108, i.e. moving of synchronization point 128 of buffer 108 from position A to position B. Starting at the new synchronization point a number of MAC-d PDUs 122 stored in buffer 114 are concatenated to form a next MAC-hs PDU to be transmitted in the consecutive radio frame 124. This process goes on until all user data 120 have been transmitted to user equipment 106 through dedicated buffer 114 of Node B 102.

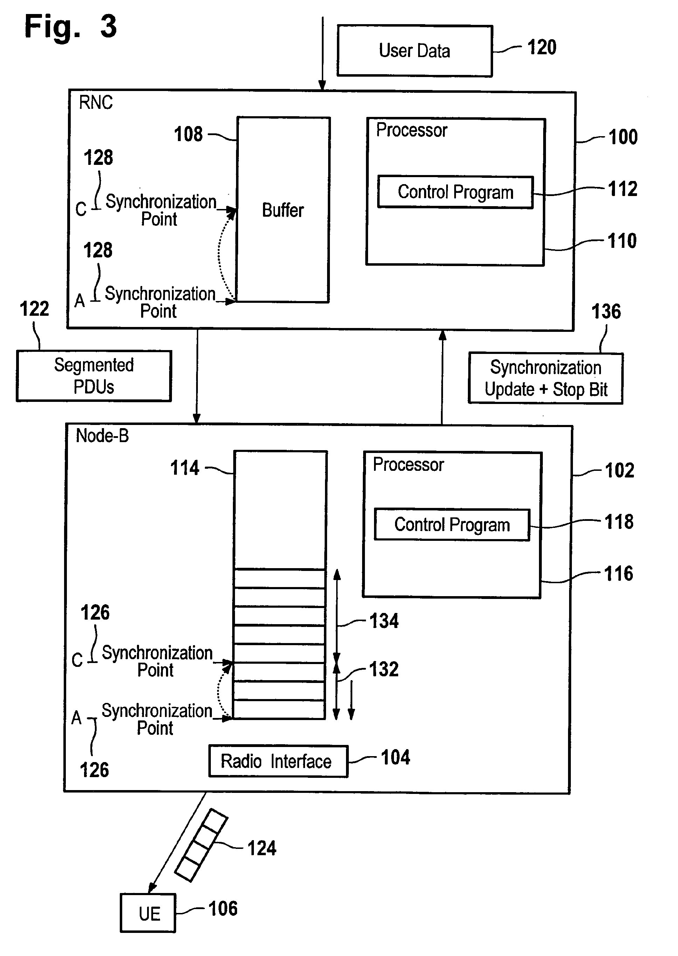

Figure 3 shows the block diagram of figure 2 when the transmission of MAC-d PDUs from buffer 114 to UE 106 fails. When it is determined by control program 118 that the transmission of MAC-d PDUs of buffer 114 becomes impossible, e.g. due to deteriorating radio conditions or other reasons, the following happens: the synchronization point 126 is moved from position A to position C corresponding to portion 132 of buffer 114 from where MAC-d PDUs have been successfully transmitted to UE 106. Due to deteriorating radio conditions or for other reasons, MAC-d PDUs stored in portion 134 of buffer 114 cannot be transmitted to UE 106 via radio interface 104.

As a consequence control program 118 sends control message 136 to RNC 100. Control message 136 contains information that enables RNC 100 to perform the synchronisation update, i.e. moving synchronisation point 128 from position A to position C. Further control message 136 contains an additional "stop bit" or another suitable flag that indicates that data from position C onwards needs to be transferred again. In addition control message 136 can indicate that the segment size, i.e. the size of the MAC-d PDUs, that are to be transferred again from RNC 100 to Node B 102 is to be reduced. Further control message 136 can indicate the actual data capacity of Node B.

When the MAC-d PDUs with the received segment size are received from RNC 100 portion 134 of buffer 114 is over written.

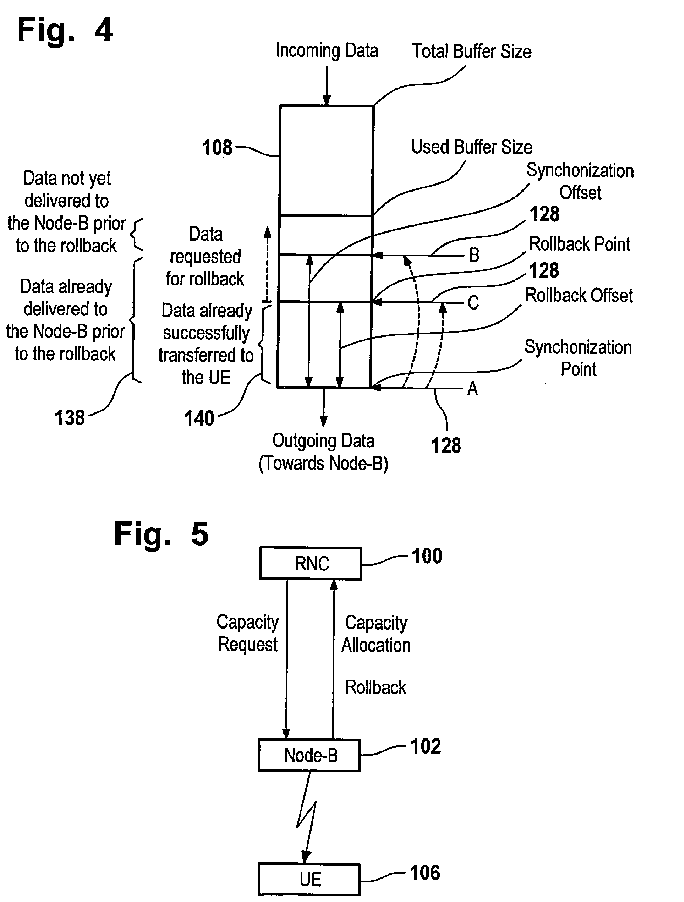

Figure 4 illustrates an alternative method of controlling buffer 108. Buffer 108 has portion 138 containing data that has already been transferred from RNC 100 to Node B 102. When RNC 100 receives control message 136, portion 140 of data that has already been successfully transmitted from Node B 102 to UE 106 is communicated to RNC 100. This way the synchronization point is updated, i.e. synchronization point 128 is moved from position A to position C. Data in buffer 108 between position C and the used buffer size is transferred again. In case the renewed transfer is due to deteriorating radio conditions the size of the data packets is reduced correspondingly. The renewed transfer of the data is referred to as "rollback" in the following.

Alternatively the synchronization is performed by moving synchronization point 128 to position B at the end of portion 138. This position is communicated from Node B 102 to RNC 100 by means of the synchronization offset contained in control message 136. The starting point for the rollback operation, i.e. the renewed transfer of the data packet, is communicated by including the rollback offset in control message 136. The rollback offset is the offset between positions A and C.

Figure 5 shows an embodiment where RNC 100 issues a capacity request to Node B 102 when data packets for transfer to Node B 102 are available within RNC 100. Node B 102 responds with a capacity allocation message to RNC 100 in order to inform RNC 100 of the available capacity in Node B for receiving of data packets. Further Node B 102 may send a rollback request to RNC 100 in order to request a renewed transfer of previously received data packets and/or for buffer synchronization.

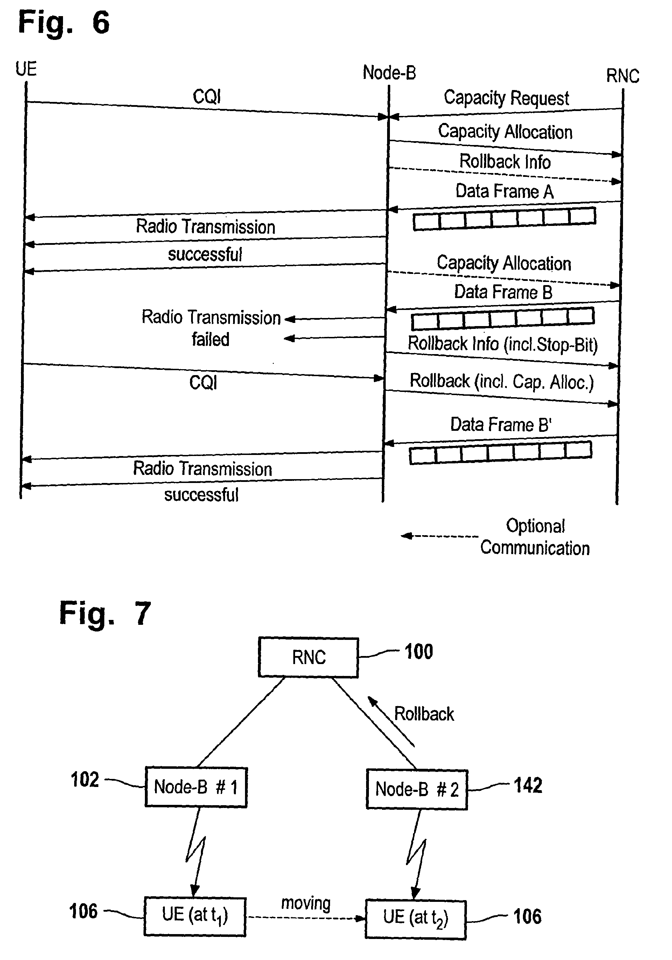

Figure 6 shows a corresponding object relationship diagram which encompasses UE, Node B and RNC.

UE sends channel quality indicator (CQI) to Node B. This way Node B can make a determination regarding the maximum data packet size which can be sent to the UE in view of actual radio conditions. Node B receives capacity request from RNC and responds with capacity allocation message to RNC. As an option Node B sends rollback info to RNC. By means of the rollback info the positions of the synchronization points of the buffer of Node B and the buffer of RNC are updated in order to discard data packets that have already been transmitted from Node B to user equipment UE, if any.

Next Node B receives data frame A which comprises multiple MAC-d PDUs from RNC. After successful transmission of data frame A from Node B to UE Node B sends another capacity allocation message to RNC. In response RNC sends data frame B. Transmission of data frame B from Node B to UE fails or is impossible due to deteriorating radio conditions. In response Node B sends rollback info to RNC. In this instance the rollback info includes the stop-bit in order to indicate that a renewed transfer of data frame B with reduced data packet size is necessary.

Node B receives an updated CQI from UE. On this basis Node B determines the new segment size for the data packets and sends a corresponding rollback message that includes the requested segment size and the indication of the capacity allocation to the RNC. In response the RNC sends data frame B' with reduced segment size. Due to the reduced segment size data frame B' can be transmitted successfully from Node B to UE.

Figure 7 illustrates a handover situation where UE 106 moves outside the coverage of Node B 102 to coverage of Node B 142. Both Node B 102 and Node B 142 are connected to the same RNC 100.

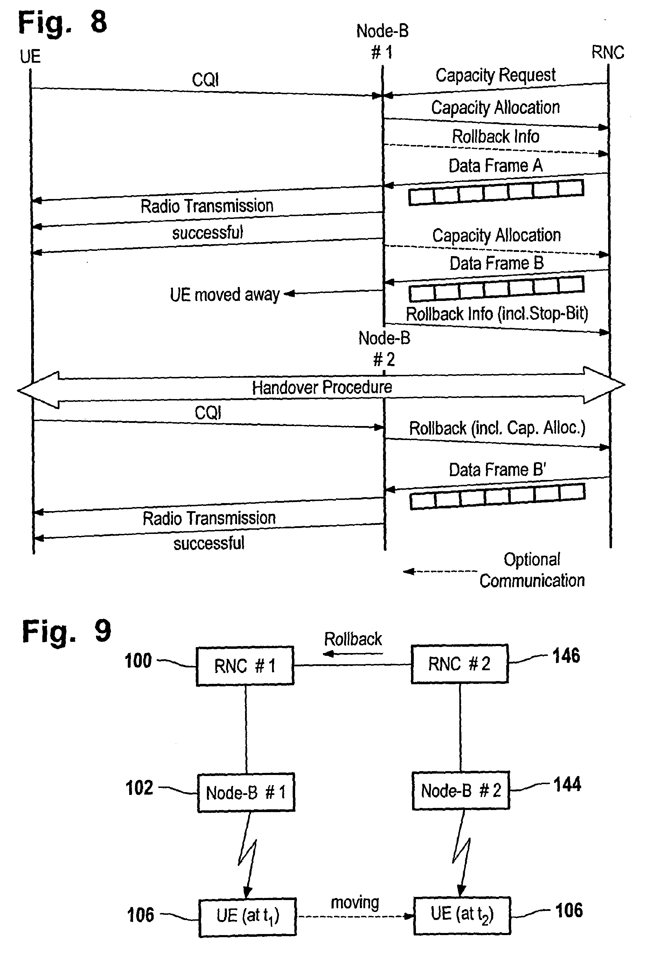

Figure 8 shows the corresponding entity relationship diagram. The object relationship diagram of figure 8 differs from that of figure 6 as data frame B cannot be transmitted from Node B to user equipment UE due to the base station handover rather than due to deteriorating radio conditions. As a consequence the target Node B 142 to which the UE 106 has moved receives the updated CQI. The target Node B 142 also sends the rollback message to the RNC 100 rather than the original Node B 102. In response RNC 100 performs the transfer of data frame B' to the target Node B 142 rather than to the original Node B 102.

Figure 9 illustrates an RNC handover where UE 106 moves outside the coverage of the original RNC 100. UE 106 moves to Node B 144 which is coupled to the target RNC 146.

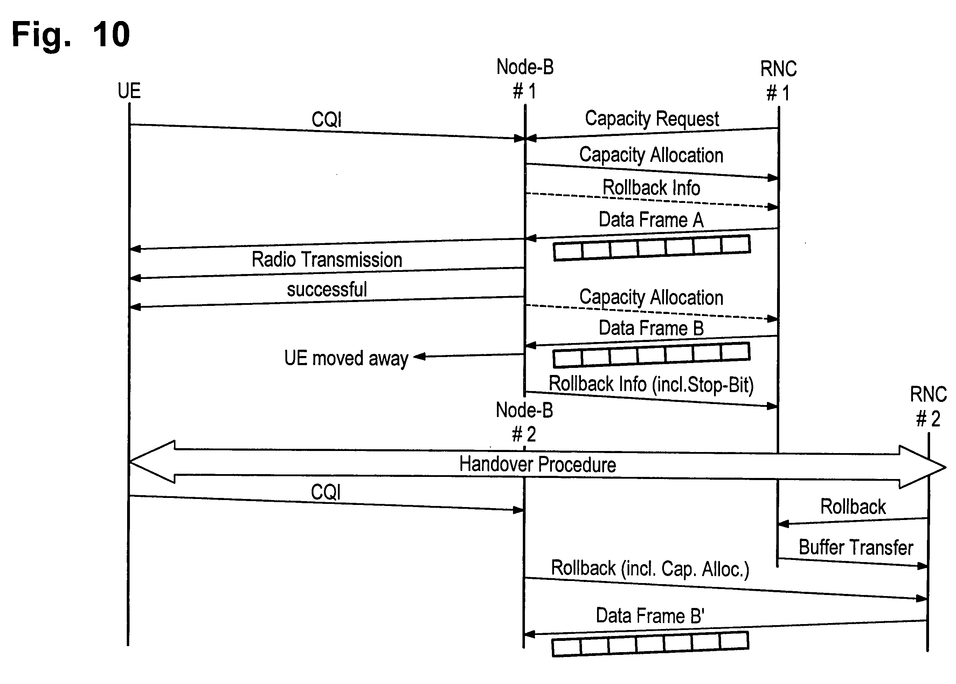

Figure 10 illustrates the corresponding object relationship diagram. In addition to the process shown in figure 8 the original RNC 100 receives a message from the target RNC 146 due to the RNC handover procedure. In response the original RNC 100 sends the contents of its buffer starting with the synchronization point to the target RNC 146. The target RNC transfers data frame B' to the target Node B 144. From there data frame B' can be transmitted to the UE 106.

### List of Reference Numerals

- 100: radio network controller (RNC)
- 102: Node B
- 104: radio interface
- 106: user equipment (UE)
- 108: buffer
- 110: processor
- 112: control program
- 114: buffer
- 116: processor
- 118: control program
- 120: user data
- 122: protocol data unit (PDU)
- 124: Radio frame
- 126: synchronization point
- 128: synchronization point
- 130: control message
- 132: portion
- 134: portion
- 136: control message
- 138: portion
- 140: portion
- 142: Node B
- 144: Node B
- 146: RNC

## Claims

1. A method of providing packetized data from a radio network controller of a wireless cellular telecommunication system to a base station of the wireless cellular telecommunication system, the method comprising:
- transferring of a data packet from the radio network controller to the base station,
- in case the data packet cannot be transmitted from the base station to a user equipment: requesting a renewed transfer of the data packet by the base station from the radio network controller.

2. The method of claim 1, wherein the data packet cannot be transmitted from the base station to the user equipment due to a packet size of the data packet that is too large for actual radio conditions, further comprising reducing the packet size by the radio network controller and transferring the data packet with the reduced packet size from the radio network controller to the base station.

3. The method of claim 1, wherein the data packet cannot be transmitted from the base station to the user equipment due to a base station handover and further comprising performing the renewed transfer from the radio network controller to the target base station of the handover.

4. The method of claim 1, wherein the data packet cannot be transmitted from the base station to the user equipment due to a radio network controller handover, and further comprising transferring of the data packet from the radio network controller to a target radio network controller, and performing of the renewed transfer of the data packet from the target radio network controller to a target base station of the handover.

5. The method of claim 1, further comprising:
- buffering of the data packets in a radio network controller buffer,
- buffering of the data packets received by the base station from the radio network controller in a base station buffer,
- updating locations of synchronisation points of the radio network controller buffer and the base station buffer in order to remove data packets from the radio network controller buffer and the base station buffer that have been transmitted to the user equipment from the base station buffer.

6. The method of claim 5, wherein the updating of the locations of the synchronization points is performed when the data packet cannot be transmitted from the base station to the user equipment.

7. A computer program product for controlling a base station of a wireless cellular telecommunication system, the computer program product comprising instructions for requesting a renewed transfer of data packets from a radio network controller in case the data packets cannot be transmitted from the base station to a user equipment.

8. A computer program product for a radio network controller, the computer program product comprising instructions for transferring of a data packet to a base station of the wireless cellular telecommunication system, and for repeating the transfer of the data packets in case a corresponding request is received from the base station being indicative that the data packet cannot be transmitted from the base station to a user equipment.

9. A base station for a wireless cellular telecommunication system comprising means (114, 116, 118, 126) for requesting a renewed transfer of a data packet from a radio network controller (100) of the wireless cellular telecommunication system in case the data packets cannot be transmitted from the base station (102) to the user equipment (106).

10. A radio network controller for a wireless cellular telecommunication system comprising means (108, 110, 112, 128) for repeating the transfer of a data packet (122) to a base station (102) in case the previously transferred data packet cannot be transmitted from the base station to a user equipment (106).
